# EUROPEAN PATENT SPECIFICATION

(11) **EP 4 001 593 B1**
(45) Date of publication and mention of the grant of the patent: **20.12.2023**
(21) Application number: 20207344.1
(22) Date of filing: 13.11.2020
(51) Int. Cl.: F01D 9/04, F01D 11/00

(54) **A GAS TURBINE VANE COMPRISING AN IMPINGEMENT COOLED INNER SHROUD**
EINE GASTURBINENLEITSCHAUFEL MIT EINER PRALLGEKÜHLTEN INNENPLATTFORM
UNE AUBE DIRECTRICE DE TURBINE À GAZ COMPRENANT UNE PLATE-FORME INTERNE REFROIDIE PAR IMPACT

(43) Date of publication of application: 25.05.2022
(73) Proprietor: Doosan Enerbility Co., Ltd., Seongsan-gu Changwon-si, Gyeongsangnam-do 51711 (KR)
(72) Inventor: GALOUL, Vincent, 5400 Baden (CH); HAUSWIRTH, Simon, 5400 Baden (CH); JONES, Richard, 5400 Baden (CH)
(74) Representative: Ter Meer Steinmeister & Partner

(56) References cited:
- EP-A1- 2 626 519
- EP-A1- 3 273 002
- US-A1- 2012 121 415
- US-A1- 2016 201 472
- US-B1- 9 683 444

## Description

### FIELD OF THE INVENTION

The present invention relates to turbine vanes for a gas turbine and to gas turbines, particularly to cooling of gas turbine vanes and more particularly to techniques for cooling inner shrouds of gas turbine vanes.

### BACKGROUND OF THE INVENTION

Gas turbine vanes, also referred to as nozzles, include an airfoil extending radially in-between an inner shroud and an outer shroud, also referred to as inner platform and outer platform. The inner shroud and the outer shroud define parts of hot gas flow path through the turbine section and are bathed in hot gas during operation of the turbine. Thus, cooling of the shrouds is necessary.

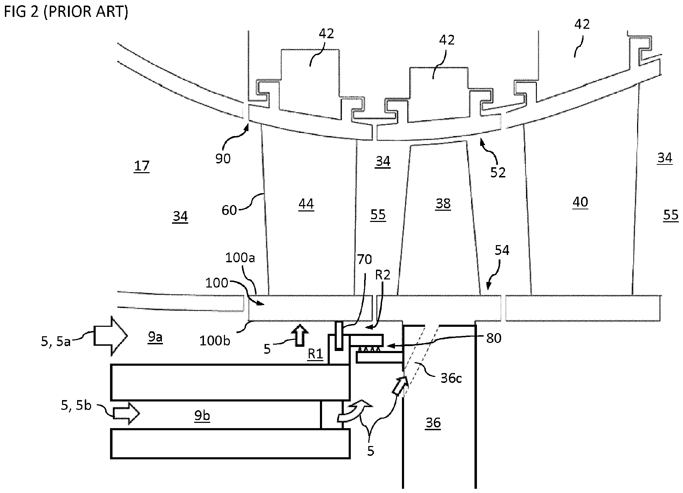

FIG. 2 shows schematically illustrates a conventional cooling scheme for an inner shroud 100 of a conventional turbine vane 44. The turbine vane 44, hereinafter also referred to as the vane 44, is positioned downstream of a transition duct 17 extending from a combustor of the gas turbine, in an annular hot gas path 55 which is partially defined by the inner shroud 100 and an outer shroud 90 of the vane 44. An airfoil 60 of the vane 44 extending between the shrouds 90, 100 is disposed in the hot gas path 55. The outer shroud 90 is disposed towards an outer casing of a stator 42 and defines a radially outer surface 52 of the hot gas path 55, while the inner shroud 100 is disposed radially inwards towards a central axis i.e. the rotational axis of the gas turbine and defines a radially inner surface 54 of the hot gas path 55.

Hot gases or combustion products 34 flow from the combustor into the hot gas path 55 via the transition duct 17, and thus the airfoil 60 as well as surfaces of the shrouds 90, 100, for example an upper surface 100a of the inner shroud 100, are bathed in hot gases 34. Cooling air 5 is channeled from the compressor into the vane 44 to cool the vane 44.

FIG 2 schematically depicts a first flow channel 9a through which a portion 5a of cooling air 5 is channeled towards the inner shroud 100, particularly towards a lower surface 100b of the inner shroud 100. A seal unit 70, also referred to as axial seal 70, is disposed at the lower surface 100b of the inner shroud 100 to maintain appropriate pressure of the cooling air 5 in a first region R1 located axially upstream of a second region R2 at the lower surface 100b of the inner shroud 100. The seal unit 70 may be formed as an annular plate that extends around the central axis of the gas turbine and seals or stops or limits the flow of cooling air 5a towards the second region R2. The seal unit 70 is referred to as axial seal since it is configured to block flow of cooling air 5 in the axial direction. The seal unit 70 is required to maintain appropriate pressure in the first region R1 so that adequate cooling air flow may be maintained to different parts of the vane 44.

FIG 2 also schematically depicts a second flow channel 9b through which a portion 5b of cooling air 5 is channeled towards a turbine blade 38 located downstream of the vane 44, via a cooling air channel 36c formed through a blade carrying disk 36. An interstage seal 80, also referred to as a radial seal such as a labyrinth seal 80, is disposed between the vane 44 and the disk 36, and is configured to block flow of cooling air 5 in the radial direction between a vane stage comprising the vane 44 and a blade stage comprising the blade 38 and the blade carrying disk 36.

As can be seen from FIG 2, a part of the inner shroud 100 in the second region R2 is not appropriately cooled.

Therefore, it is an object of the present invention to provide a mechanism or technique for effectively cooling the inner shroud of a gas turbine vane. Preferably, the technique for cooling the inner shroud of a gas turbine vane is desired to enhance cooling without increasing an amount of cooling air drawn from the compressor for such cooling.

US 9 683 444 B1 presents a multiple wall impingement plate for sequential impingement cooling of a turbine hot part. An air hot part of a gas turbine engine, the hot part having an isogrid formed on a cool surface opposite to a hot surface, where an impingement plate bonded over multiple impingement cooling surfaces of the airfoil, where the impingement plate forms a series of double or triple impingement cooling for separate surfaces of the airfoil. The impingement plate can be shaped and sized to fit over an airfoil surface that requires multiple impingement cooling.

### SUMMARY OF THE INVENTION

The invention is set out by the appended claims.

One or more of the above objects are achieved by a turbine vane for a gas turbine, a turbine vane assembly or stage for a gas turbine and a gas turbine according to independent claim(s) appended to the present disclosure. Advantageous embodiments of the present technique are provided in dependent claims. Features of independent claim may be combined with features of claims dependent on the independent claim, and features of dependent claims can be combined with each other.

In a first aspect of the present technique, a turbine vane for a gas turbine is presented. The turbine vane includes an inner shroud, a seal unit, a first impingement unit, a second impingement unit, and at least one connector flow channel.

The inner shroud has an upper surface and a lower surface. The turbine vane may include an airfoil extending from the upper surface. The turbine vane may also include an outer shroud, and the airfoil may extend radially between the inner and the outer shrouds.

The 'radial' direction as used in the present disclosure may be understood as radial direction with respect to the rotational axis or the central axis of the gas turbine. Similarly, phrases like 'radially inner' or 'radially inward' and like phrases as used in the present disclosure may be understood as in the radial direction towards the rotational axis or the central axis of the gas turbine; wherein phrases like 'radially outer' or 'radially outward' and like phrases as used in the present disclosure may be understood as in the radial direction away from the rotational axis or the central axis of the gas turbine. Also, radial distance may be understood as a distance measured along the radial direction.

The inner shroud may be understood as the radially inner shroud or radially inner platform or simply as inner platform or lower shroud or lower platform, with respect to the rotational axis of the gas turbine. The inner shroud forms a radially inner surface of an annular hot gas flow path of the turbine. The outer shroud may be understood as the radially outer shroud or radially outer platform or simply as outer platform or upper platform or upper shroud, with respect to the rotational axis of the gas turbine. The outer shroud forms a radially outer surface of the annular hot gas flow path of the turbine. The inner and the outer shrouds define or limit the hot gas flow path, i.e. the annular shape of the gas flow path through which the combustion products flow in the turbine section of the gas turbine.

The airfoil has a pressure wall and a suction wall meeting at a leading edge and a trailing edge. The inner shroud may include a pressure-wall side, a suction-wall side, a leading-edge side and a trailing-edge side.

The pressure-wall side, the suction-wall side, the leading-edge side and the trailing-edge side of the inner shroud may correspond to the pressure wall, the suction wall, the leading edge and the trailing edge of the airfoil.

The seal unit is disposed at the lower surface of the inner shroud and defines a first and a second region at the lower surface of the turbine vane. The seal unit seals off the first region from the second region, i.e. blocks or limits or stops flow of cooling air from the first region to the second region.

The seal unit may be an axial seal and may seal or block or limit or stop flow of cooling air from the first region to the second region in the axial direction of the gas turbine. The first region may be axially upstream of the second region and the first and the second regions may be separated from each other by the seal unit.

The seal unit may extend in a circumferential direction around a central axis of the gas turbine.

The seal unit may be disposed between the leading-edge side and the trailing-edge side, i.e. spaced apart from the leading-edge side and the trailing-edge side and extending from the pressure-wall side to the suction-wall side of the inner shroud. Thus, the seal unit defines the first region between the leading-edge side and the seal unit and the second region between the seal unit and the trailing-edge side at the lower surface of the inner shroud.

The first impingement unit is arranged in the first region and includes a first impingement plate facing the lower surface of the inner shroud. The first impingement plate is radially spaced apart from the lower surface of the inner shroud to define a first impingement chamber between the lower surface of the inner shroud and the first impingement plate. The first impingement unit may be arranged to be radially aligned with a first portion of the inner shroud. The first impingement unit may face and be spaced apart in a radial direction from the lower surface of the first portion of the inner shroud.

The first impingement plate may include a plurality of impingement holes or first impingement holes, i.e. through-holes for generating impingement jets. The first impingement plate receives cooling air, preferably form the compressor, and subsequently forms impingement jets, as a result of cooling air passing through the impingement holes, directed into the first impingement chamber.

The second impingement unit is arranged in the second region and includes a second impingement plate facing the lower surface of the inner shroud. The second impingement plate is radially spaced apart from the lower surface of the inner shroud to define a second impingement chamber between the lower surface of the inner shroud and the second impingement plate. The second impingement unit may be arranged to be radially aligned with a second portion of the inner shroud. The second impingement unit may face and be spaced apart in a radial direction from the lower surface of the second portion of the inner shroud.

The first portion and the second portion of the inner shroud may be understood as parts or portion of the inner shroud that are divided or demarcated or limited or defined, when viewed radially, by the seal unit. In other words, if the seal unit were extended imaginarily in the radial direction, such imaginary extension would section the inner shroud into the first portion and the second portion. The first portion is disposed upstream of the second portion, with respect to hot gas flow path.

A distance between the first impingement plate and the lower surface of the inner shroud i.e. the target cooling surface may be between 1mm (millimeter) to 4mm.

A distance between the second impingement plate and the lower surface of the inner shroud i.e. the target cooling surface may be between 1mm (millimeter) to 4mm.

The first and the second impingement units may be separated from each other or may be spaced apart from each other by the seal unit.

The at least one connector flow channel may have an inlet positioned at the first impingement chamber for receiving cooling air from the first impingement chamber and an outlet positioned at the second region to direct cooling air from the first impingement chamber to the second region.

The connector flow channel may be formed as a tubular structure or tubing or hollow pipe or tube or a through-hole.

The second impingement plate may include a plurality of impingement holes or second impingement holes, i.e. through-holes for generating impingement jets. The second impingement plate receives cooling air from the connector flow channel, i.e. the cooling air entering the inlet of the connector flow channel at the first region or first impingement chamber and exiting from the outlet of the connector flow channel at the second region. The second impingement plate subsequently forms impingement jets, as a result of cooling air passing through the impingement holes, directed into the second impingement chamber.

Thus, cooling air used to impinge onto the lower surface of the inner shroud in the first region is subsequently directed into the second region and then flows through the second impingement plate into the second impingement chamber in form of impingement jets. Therefore, the same cooling air is used to perform impingement cooling twice - first at the lower surface of the inner shroud in the first region i.e. cooling the first portion of the inner shroud, and thereafter at the lower surface of the inner shroud in the second region i.e. cooling the second portion of the inner shroud.

To explain further, cooling air serially flows as follows: flows towards the first impingement plate, passes through the first impingement holes consequently generating impingement jets into the first impingement chamber towards the inner shroud, then flows through the connector flow channel from the first impingement chamber into the second region, then flows towards the second impingement plate, subsequently passes through the second impingement holes consequently generating impingement jets into the second impingement chamber towards the inner shroud.

The lower surface of the inner shroud may be indented radially in the first region and thus may include a first impingement cavity, and the first impingement chamber may include the first impingement cavity.

The first impingement plate may be positioned at or within the first impingement cavity, thereby making the arrangement compact.

The lower surface of the inner shroud may be indented radially in the second region and thus may include a second impingement cavity, and the second impingement chamber may include the second impingement cavity.

The second impingement plate may be positioned at or within the second impingement cavity, thereby making the arrangement compact.

The first impingement cavity and the second impingement cavity may be separated by an intervening section or intervening wall of the inner shroud. The intervening section or intervening wall of the inner shroud may extend radially inwards from the lower surface of the inner shroud. The connector flow channel extends through the intervening section of the inner shroud. In other words, the connector flow channel may be formed as a through-hole in the intervening section or intervening wall of the inner shroud

The second impingement plate may be arranged to be flush with an opening of the second impingement cavity. This makes the arrangement more compact.

The second impingement plate may be arranged within the second impingement cavity. This makes the arrangement further compact.

The connector flow channel extends through the seal unit.

The seal unit includes at least one of a seal support lug or member, and a seal plate.

The seal support lug may extend radially inwards from the lower surface of the inner shroud. The seal support lug may define the first region and the second region. The connector flow channel extends through the seal support lug. The seal plate may be supported at or affixed to the seal support lug. The connector flow channel may be formed as a through-hole passing through the seal support lug or may be formed as a separate tubular structure or tube inserted through a through-hole formed in the seal support lug.

The seal plate may not have any connector flow channel formed therethrough. Alternatively a further connector flow channel extends through the seal plate.

The seal plate may be arranged to extend radially inwards from the lower surface of the inner shroud or from the seal support lug. The seal plate may define the first region and the second region. The connector flow channel extends through the seal plate. The seal plate may be supported at or affixed to the lower surface of the inner shroud or to the seal support lug. The connector flow channel may be formed as a through-hole passing through the seal plate or may be formed as a separate tubular structure or tube inserted through a through-hole formed in the seal plate.

The seal support lug may not have any connector flow channel formed therethrough. Alternatively a further connector flow channel extends through the seal support lug.

A width of the connector flow channel is between 2 percent and 40 percent, and preferably between 5 percent and 15 percent, of a width of the seal support lug or of the seal plate, measured along a circumferential direction of the inner shroud

The 'circumferential' direction as used in the present disclosure may be understood as circumferential direction with respect to the rotational axis or the central axis of the gas turbine.

The second impingement unit may comprise a cover plate arranged radially inward of and facing the second impingement plate, i.e. the cover plate may be arranged between the second impingement plate and the rotational axis or central axis of the gas turbine. The cover plate may be spaced apart, with respect to the radial direction from the second impingement plate, and thus a cooling air receiving chamber may be defined thereinbetween i.e. between the second impingement plate and the cover plate.

The outlet of the connector flow channel may be positioned at the cooling air receiving chamber.

The lower surface of the inner shroud in the first region may include a base opening of the airfoil. The base opening may be understood as the opening of the internal space or cavity of the airfoil or as an opening fluidly communicating with the internal space or cavity of the airfoil. The first impingement chamber and the base opening of the airfoil are non-overlapping or discontinuous or fluidly non-communicating with respect to each other. In other words, the first impingement chamber and the base opening of the airfoil are fluidly disconnected from each other such that there is no flow connection between the first impingement chamber and the base opening of the airfoil.

A radial distance of the second impingement plate from the lower surface of the inner shroud may be less than or equal to a radial distance of the first impingement plate from the lower surface of the inner shroud

A diameter of impingement holes of the second impingement plate may be smaller than a diameter of the impingement holes of the first impingement plate.

The inner shroud may comprise at least one shroud cooling hole or channel having an inlet positioned at the second impingement chamber and an outlet positioned at the upper surface of the inner shroud or a side surface of the inner shroud

In a second aspect of the present technique, a gas turbine comprising a turbine vane is presented. The turbine vane may be according to the first aspect of the present technique as presented hereinabove.

The gas turbine may include a turbine blade downstream of the turbine vane, with respect to hot gas flow direction. The gas turbine may also include an interstage seal extending between the turbine blade and the turbine vane. The interstage seal may be understood as a seal extending between the turbine blade and the turbine vane, for example a labyrinth seal.

The second impingement unit may be positioned within a space defined by the inner shroud of the turbine vane, the seal unit and the interstage seal. The interstage seal is configured to seal the space at radially inner side of the space.

The first impingement plate may be configured to receive cooling air from a last stage or final stage of the compressor.

### BRIEF DESCRIPTION OF THE DRAWINGS

The above mentioned attributes and other features and advantages of the present technique and the manner of attaining them will become more apparent and the present technique itself will be better understood by reference to the following description of embodiments of the present technique taken in conjunction with the accompanying drawings, wherein:
FIG 1 shows a sectional view of a part of an exemplary embodiment of a gas turbine in which an exemplary embodiment of a turbine vane of the present technique may be incorporated;
FIG 2 schematically illustrates a conventional cooling scheme for inner shroud of a conventional turbine vane;
FIG 3 schematically illustrates a cooling scheme for inner shroud of a turbine vane of the present technique;
FIG 4 schematically depicts a bottom view of an exemplary embodiment of the turbine vane of the present technique;
FIG 5 depicts a cross-sectional view at line I-I of the turbine vane of FIG 4;
FIGs 6A - 6C schematically depict cross-sectional views of different exemplary embodiments of the turbine vane of the present technique;
FIG 7 schematically depicts exemplary embodiment of flow of cooling air within the inner shroud of the turbine vane of the present technique;
FIG 8 schematically depicts a cross-sectional view of yet another exemplary embodiment of the turbine vane of the present technique depicting an exemplary arrangement of first and second impingement units;
FIGs 9A - 9B schematically depict cross-sectional views of exemplary embodiments of the turbine vane of the present technique depicting shroud cooling holes;
FIG 10 schematically depicts bottom-sectional view of an exemplary embodiment of the turbine vane of the present technique depicting relative positioning of a base opening of an airfoil of the turbine vane and of first and second impingement chambers of the turbine vane of the present technique; and
FIGs 11A - 11C schematically depict cross-sectional views of further exemplary embodiments of the turbine vane of the present technique.

Hereinafter, above-mentioned and other features of the present technique are described in detail. Various embodiments are described with reference to the drawing, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

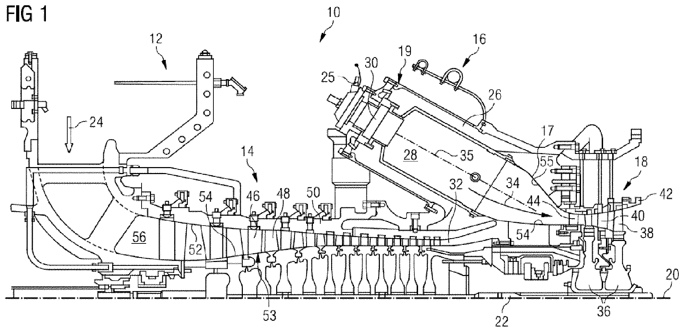

FIG. 1 shows an example of a gas turbine or gas turbine engine 10 in a sectional view. The gas turbine 10 may comprises, in flow series, an inlet 12, a compressor or compressor section 14, a combustor section 16 and a turbine section 18 which are generally arranged in flow series and generally about and in the direction of a longitudinal or rotational axis 20. The gas turbine 10 may further comprises a shaft 22 which is rotatable about the rotational axis 20 and which extends longitudinally through the gas turbine 10. The shaft 22 may drivingly connect the turbine section 18 to the compressor section 14.

In operation of the gas turbine 10, air 24, which is taken in through the air inlet 12 is compressed by the compressor section 14 and delivered to the combustion section or burner section 16. The burner section 16 may comprise a burner plenum 26, one or more combustion chambers 28 and at least one burner 30 fixed to each combustion chamber 28. The combustion chambers 28 and the burners 30 may be located inside the burner plenum 26. The compressed air passing through the compressor 14 may enter a diffuser 32 and may be discharged from the diffuser 32 into the burner plenum 26 from where a portion of the air may enter the burner 30 and is mixed with a gaseous or liquid fuel. The air/fuel mixture is then burned and the combustion gas 34 or working gas from the combustion is channeled through the combustion chamber 28 to the turbine section 18 via a transition duct 17.

This exemplary gas turbine 10 may have a cannular combustor section arrangement 16, which is constituted by an annular array of combustor cans 19 each having the burner 30 and the combustion chamber 28, the transition duct 17 has a generally circular inlet that interfaces with the combustor chamber 28 and an outlet in the form of an annular segment. An annular array of transition duct outlets may form an annulus for channeling the combustion gases to the turbine 18.

The turbine section 18 may comprise a number of blade carrying discs 36 attached to the shaft 22. In the present example, two discs 36 each carry an annular array of turbine blades 38 are depicted. However, the number of blade carrying discs could be different, i.e. only one disc or more than two discs. In addition, guiding vanes 40, which are fixed to a stator 42 of the gas turbine 10, may be disposed between the stages of annular arrays of turbine blades 38. Between the exit of the combustion chamber 28 and the leading turbine blades 38 inlet guiding vanes 44 may be provided and turn the flow of working gas onto the turbine blades 38.

The combustion gas from the combustion chamber 28 enters the turbine section 18 and drives the turbine blades 38 which in turn rotate the shaft 22. The guiding vanes 40, 44 serve to optimize the angle of the combustion or working gas on the turbine blades 38.

The turbine section 18 drives the compressor section 14. The compressor section 14 may comprise an axial series of vane stages 46 and rotor blade stages 48. The rotor blade stages 48 may comprise a rotor disc supporting an annular array of blades. The compressor section 14 may also comprise a casing 50 that surrounds the rotor stages and supports the vane stages 48. The guide vane stages may include an annular array of radially extending vanes that are mounted to the casing 50. The vanes are provided to present gas flow at an optimal angle for the blades at a given engine operational point. Some of the guide vane stages may have variable vanes, where the angle of the vanes, about their own longitudinal axis, can be adjusted for angle according to air flow characteristics that can occur at different engine operations conditions. The casing 50 may define a radially outer surface 52 of the passage 56 of the compressor 14. A radially inner surface 54 of the passage 56 may be at least partly defined by a rotor drum 53 of the rotor which may be partly defined by the annular array of blades 48.

The present technique is described with reference to the above exemplary gas turbine having a single shaft or spool connecting a single, multi-stage compressor and a single, one or more stage turbine. However, it should be appreciated that the present technique is equally applicable to two or three shaft engines and which can be used for industrial, aero or marine applications.

The terms upstream and downstream refer to the flow direction of the airflow and/or working gas flow through the gas turbine unless otherwise stated. The terms forward and rearward refer to the general flow of hot gas through the gas turbine. The terms axial, radial and circumferential are made with reference to the rotational axis 20 or central axis 20 of the gas turbine, unless otherwise stated.

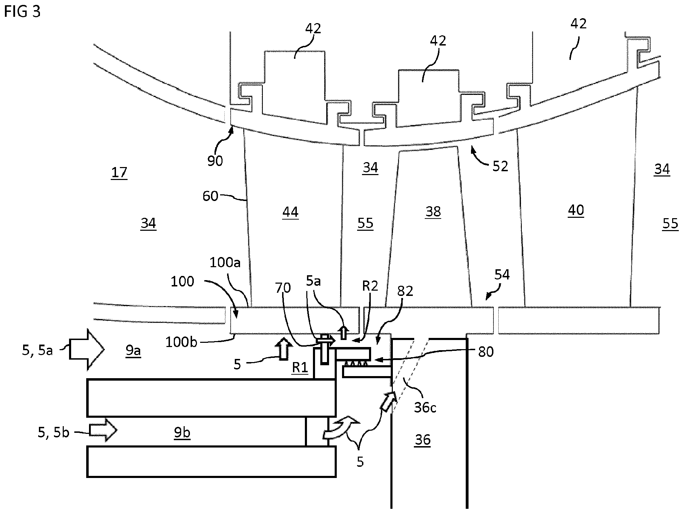

In the present technique, a turbine vane 1 including an inner shroud 100 and outer shroud 90 having an airfoil 60 extending thereinbetween is presented - as shown for example in FIGs 3, 4 and 6A - 6C. The turbine vane 1 of the present technique may be the vane 40, 44 of the gas turbine 10, described hereinabove.

FIG 3 schematically illustrates a cooling scheme for inner shroud of the turbine vane 1 of the present technique, and may be appreciated by comparing with FIG 2. The explanation provided with respect to FIG 2 is applicable to FIG 3.

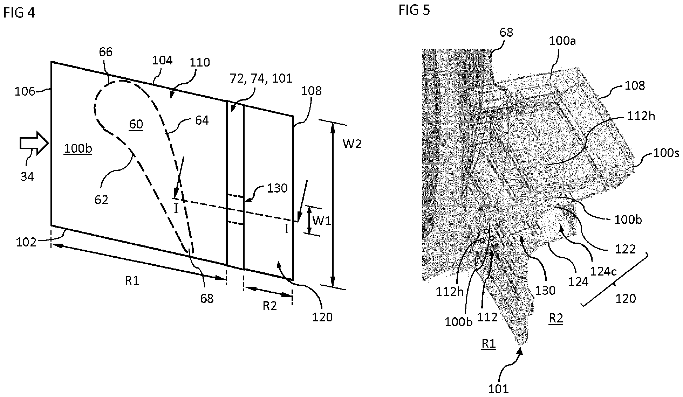

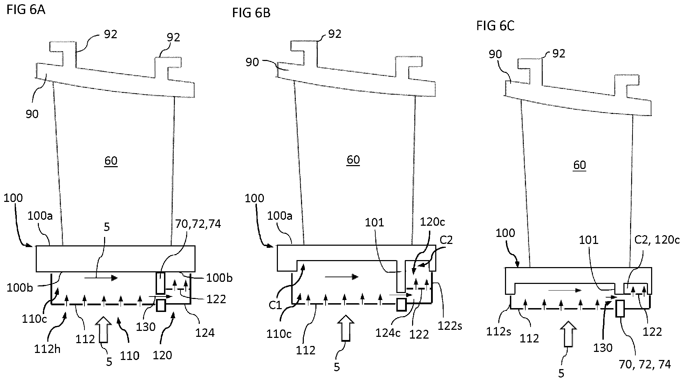

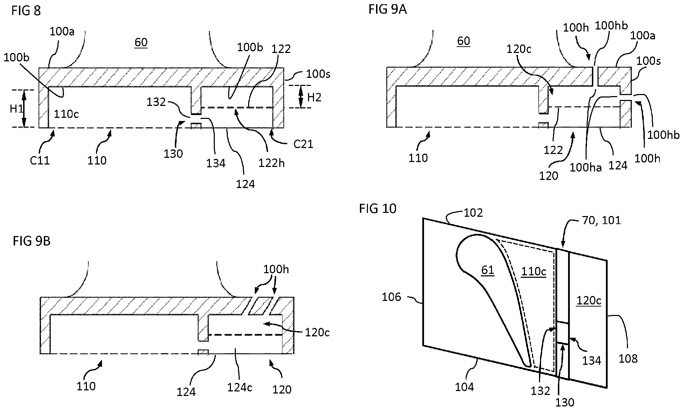

FIG. 3, in combination of FIGs 4, 6A, 6B and 6C, schematically illustrates the inner shroud 100 of the turbine vane 1 and the cooling mechanism or scheme of the present technique. It may be noted that in FIGs 6A, 6B and 6C, and also other FIGs such as FIGs 8, 9A and 9B, are schematic representations and depiction of the cooling mechanism for example dimensions of the impingement units and distance(s) between the impingement units and target surface of the impingement cooling have been exaggerated compared to other parts of the vane - for ease of understanding.

The turbine vane 1, hereinafter also referred to as the vane 1 or nozzle 1 or guide vane 1 or inlet nozzle 1 or inlet guide vane 1, includes the inner shroud 100, a seal unit 70, a first impingement unit 110, a second impingement unit 120, and at least one connector flow channel 130.

The inner shroud 100 has an upper surface 100a and a lower surface 100b. The turbine vane 1 may include an airfoil 60 extending from the upper surface 100a. The turbine vane may also include an outer shroud 90, and the airfoil 60 may extend radially between the inner and the outer shrouds 100. 90.

The inner shroud 100 may be understood as the radially inner shroud 100, with respect to the rotational axis 20 of the gas turbine 10. The inner shroud 100 forms a radially inner surface 54 of an annular hot gas flow path 52 of the turbine 10. The outer shroud 90 may be understood as the radially outer shroud 90, with respect to the rotational axis 20 of the gas turbine 10. The outer shroud forms a radially outer surface 54 of the annular hot gas flow path 55 of the turbine 10. The inner and the outer shrouds 100, 90 define or limit the hot gas flow path 55, i.e. the annular shape of the gas flow path through which the combustion products 34 flow in the turbine section 18 of the gas turbine 10.

The upper surface 100a of the inner shroud 100 faces the hot gas path 55 whereas the lower surface 100b of the inner shroud 100 faces the rotational axis 20 of the gas turbine 10. The upper surface 100a and the lower surface 100b of the inner shroud 100 are radially spaced apart and face opposite directions.

As shown in FIG 4, the airfoil 60 has a pressure wall 62 and a suction wall 64 meeting at a leading edge 66 and a trailing edge 68. The inner shroud 100 may include a pressure-wall side 102, a suction-wall side 104, a leading-edge side 106 and a trailing-edge side 108.

The pressure-wall side 102, the suction-wall side 104, the leading-edge side 106 and the trailing-edge side 108 of the inner shroud 100 may correspond to the pressure wall 62, the suction wall 64, the leading edge 66 and the trailing edge 68 of the airfoil 60.

The seal unit 70 is disposed at the lower surface 100b of the inner shroud 100 and defines a first and a second region R1, R2 at the lower surface 100b of the turbine vane 1. The seal unit 70 seals off the first region R1 from the second region R2, with respect to flow of cooling air 5 from the first region R1 to the second region R2.

The turbine vane 1 and the seal unit 70 may be referred to a turbine vane arrangement. The turbine vane arrangement may also include an interstage seal, explained later.

The seal unit 70 may be disposed between the leading-edge side 106 and the trailing-edge side 108, i.e. spaced apart from the leading-edge side 106 and the trailing-edge side 108 and extending from the pressure-wall side 102 to the suction-wall side 104 of the inner shroud 100. Thus, the seal unit 70 defines the first region R1 between the leading-edge side 106 and the seal unit 70 and the second region R2 between the seal unit 70 and the trailing-edge side 108 at the lower surface 100b of the inner shroud 100.

More specifically, the seal unit 70 defines the first region R1 between the leading-edge side 106, the pressure-wall side 102, the suction-wall side 104 and the seal unit 70; and the second region R2 between the seal unit 70, the trailing-edge side 108, the pressure-wall side 102 and the suction-wall side 104 - at the lower surface 100b of the inner shroud 100.

An upper surface or limit of the first and the second regions R1, R2 may be defined by the lower surface 100b of the inner shroud 100.

As can be seen from FIGs 6A - 6C, the first impingement unit 110 is arranged in the first region R1 and includes a first impingement plate 112 facing the lower surface 100b of the inner shroud 100. The first impingement plate 112 is radially spaced apart from the lower surface 100b of the inner shroud 100. A first impingement chamber 110c is defined between the lower surface 100b of the inner shroud 100 and the first impingement plate 112 in the first region R1.

The first impingement plate 112 may include a plurality of impingement holes 112h or first impingement holes 112h, i.e. through-holes for generating impingement jets. The first impingement plate 112 receives cooling air 5, preferably form the compressor section 14, and subsequently forms impingement jets, as a result of cooling air 5 passing through the first impingement holes 112h. The impingement jets so formed are emitted into or ejected into or directed into the first impingement chamber 110c. The impingement jets impinge on the surface of the inner shroud 100, preferably the lower surface 100b of the inner shroud 100, thereby cooling the inner shroud 100, i.e. cooling a first portion of the inner shroud 100, the first portion corresponding to the first region R1.

The second impingement unit 120 is arranged in the second region R2 and includes a second impingement plate 122 facing the lower surface 100b of the inner shroud 100. The second impingement plate 122 is radially spaced apart from the lower surface 100b of the inner shroud 100. A second impingement chamber 120c is defined between the lower surface 100b of the inner shroud 100 and the second impingement plate 122.

The first and the second impingement units 110, 120 may be separated from each other or may be spaced apart from each other by the seal unit 70 and/or by an intervening section 101 of the inner shroud 100.

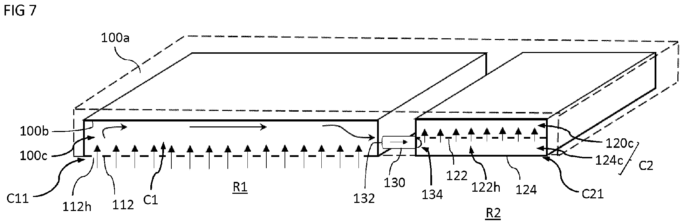

The at least one connector flow channel 130 may have an inlet 132 (shown in FIG 7) positioned at the first impingement chamber 100c for receiving cooling air 5 from the first impingement chamber 100c and an outlet 134 (shown in FIG 7) positioned at the second region R2 to direct cooling air 5 from the first impingement chamber 100c to the second region R2.

The connector flow channel 130 may be formed as a tubular structure or tube or a through-hole or hollow piping i.e. a pipe.

The second impingement plate 122 may include a plurality of impingement holes 122h or second impingement holes 122h, i.e. through-holes for generating impingement jets. The second impingement plate 122 receives cooling air 5 from the first impingement chamber 110c via the connector flow channel 130. The second impingement plate 122 subsequently forms impingement jets, as a result of cooling air 5 passing through the second impingement holes 122h. The impingement jets so formed are emitted into or ejected into or directed into the second impingement chamber 120c. The impingement jets impinge on the surface of the inner shroud 100, preferably the lower surface 100b of the inner shroud 100, thereby cooling the inner shroud 100, i.e. cooling a second portion of the inner shroud 100, the second portion corresponding to the second region R2.

To explain further as shown in FIG 7, cooling air 5 serially flows as follows: flows towards the first impingement plate 112, then passes through the first impingement holes 112h consequently generating impingement jets ejected into the first impingement chamber 110c towards the inner shroud 100, then flows into the inlet 132 of the connector flow channel 130 and through the connector flow channel 130 from the first impingement chamber 110c into the second region R2, then flows out of the outlet 134 of the connector flow channel 130 in the second region R2, and then flows towards the second impingement plate 122, and passes through the second impingement holes 122h and consequently generating impingement jets ejected into the second impingement chamber 120c towards the inner shroud 100.

Thus as schematically shown in FIG 3, the portion 5a of the cooling air 5 is used to impinge onto the lower surface 100b of the inner shroud 100 at the first impingement chamber 110c in the first region R1 and is subsequently directed into the second region R2 via the connector flow channel 130 across the seal unit 70, albeit not necessarily through the seal unit 70, and then flows through the second impingement plate 120 into the second impingement chamber 120c in form of impingement jets. Thereby, the same cooling air is used to perform impingement cooling twice - first at the lower surface 100b of the inner shroud 100 in the first region R1 i.e. cooling the first portion of the inner shroud 100, and thereafter at the lower surface 100b of the inner shroud 100 in the second region R2 i.e. cooling the second portion of the inner shroud 100.

Since, the lower surface 100b of the inner shroud 100 is cooled both at the first and the second region R1, R2 by impingement cooling, efficiency of cooling is enhanced. Furthermore, the same portion or volume of the cooling air is used for impingement cooling both at the first and the second regions R1, R2 and thus additional cooling air is not required to be drawn from the compressor to separately cool the portion of the inner shroud corresponding to the second region R2.

FIG 3 also schematically depicts a second flow channel 9b through which a portion 5b of cooling air 5 is channeled towards a turbine blade 38 located downstream of the vane 1, via a cooling air channel 36c formed through a blade carrying disk 36. An interstage seal 80, also referred to as a radial seal such as a labyrinth seal 80, is disposed between the vane 1 and the blade 38, and is configured to block flow of cooling air 5 in the radial direction between a vane stage comprising the vane 1 and a blade stage comprising the blade 38 and the blade carrying disk 36.

The interstage seal 80 may be understood as a seal extending between the turbine blade carrying disk 36 and the turbine vane 1, for example a labyrinth seal 80.

The second impingement unit 120 may be positioned within a space 82 defined by the inner shroud 100 of the turbine vane 1, the seal unit 70 and the interstage seal 80, and a platform of the blade 38 and disk 36.

Hereinafter with reference to FIGs 5, 6A, 6B and 6C different exemplary embodiments of the vane 1 are explained.

As shown in FIGs 5, 6A - 6C, the first impingement unit 110 may be formed such that the first impingement chamber 110c, also referred simply to as the first chamber 110c, has inlet for cooling air via the first impingement holes 112h, preferably only via the first impingement holes 112h, i.e. the first impingement chamber 110c has no other inlets for receiving cooling air other than the first impingement holes 112h. However, the present technique is not limited to above described arrangement and the first impingement chamber 110c may have inlets other than the first impingement holes 112h.

The first impingement unit 110 may be formed such that the first impingement chamber 110c has outlet for cooling air via the connector flow channel 130, preferably via only the inlet 132 of the connector flow channel 130, i.e. the first impingement chamber 110c has no other outlets for ejecting cooling air out of the first chamber 110c other than through the connector flow channel 130. However, the present technique is not limited to above described arrangement and the first impingement chamber 110c may have outlets other than the inlet 132 of the connector flow channel 130, eg. a cooling hole (not shown) extending from the first impingement chamber 110c into the hot gas path 55.

As shown in FIGs 5, 6A - 6C, the second impingement unit 120 may be formed such that the second impingement chamber 120c, also referred simply to as the second chamber 120c, has inlet for cooling air via the second impingement holes 122h, preferably only via the second impingement holes 122h, i.e. the second impingement chamber 120c has no other inlets for receiving cooling air other than the second impingement holes 122h. However, the present technique is not limited to above described arrangement and the second impingement chamber 120c may have inlets other than the second impingement holes 122h.

As shown in FIGs 5, 6A - 6C, the second impingement unit 120 may comprise a cover plate 124 arranged radially inward of and facing the second impingement plate 122, i.e. the cover plate 124 may be arranged between the second impingement plate 122 and the rotational axis 20 or central axis 20 of the gas turbine 10. The cover plate 124 may be spaced apart, with respect to the radial direction from the second impingement plate 122, and thus a cooling air receiving chamber 124c may be defined thereinbetween i.e. between the second impingement plate 122 and the cover plate 124.

The second impingement chamber 120c may be disposed radially outwards of and radially aligned with the cooling air receiving chamber 124c. The second impingement chamber 120c and the cooling air receiving chamber 124c may be fluidly connected to each other only by the second impingement holes 122h.

The cooling air receiving chamber 124c may be formed such that the cooling air receiving chamber 124c has inlet for cooling air via the connector flow channel 130, preferably only via the connector flow channel 130, i.e. the cooling air receiving chamber 124c has no other inlets for receiving cooling air other than the connector flow channel 130, particularly the outlet 134 of the connector flow channel 130. However, the present technique is not limited to above described arrangement and the cooling air receiving chamber 124c may have inlets other than the outlet 134 of the connector flow channel 130.

The cooling air receiving chamber 124c may be formed such that the cooling air receiving chamber 124c has outlet for cooling air via the second impingement holes 122h, preferably only via the second impingement holes 122h, i.e. the cooling air receiving chamber 124c has no other outlets for ejecting cooling air other than the second impingement holes 122h. However, the present technique is not limited to above described arrangement and the cooling air receiving chamber 124c may have outlets other than the second impingement holes 122h.

As shown in FIG 7, the inlet 132 of the connector flow channel 130 may be positioned at the first impingement chamber 110c, and the outlet 134 of the connector flow channel 130 may be positioned at the cooling air receiving chamber 124c.

As schematically shown in FIGs 6B and 6C, and FIG 7, the lower surface 100b of the inner shroud 100 in the first region R1 may include a first impingement cavity C1. The first impingement chamber 110c may include the first impingement cavity C1.

The first impingement plate 112 may be positioned at an opening C11 of the first impingement cavity C1, as shown in FIG 7. In other words, the first impingement plate 112 may be formed as a flat sheet or plate-like or planar and may be flush with the opening C11 of the first impingement cavity C1, i.e. completely covering or closing or capping the opening C11 of the first impingement cavity C1. The first impingement plate 112 may completely seal the opening C11 of the first impingement cavity C1, except cooling air flowing through the first impingement holes 112h.
Alternatively, the first impingement plate 112 may be positioned outside the first impingement cavity C1 i.e. radially spaced apart from the opening C11 of the first impingement cavity C1, as shown in FIG 6B and 6C. The first impingement unit 110 may include flanking plate members 112s or side plate members 112s that extend radially between the first impingement plate 112 and the lower surface 100b of the inner shroud 100 enclosing the first impingement cavity C 1 with the first impingement chamber 110c. The first impingement plate 112 and the flanking plate member 112s may completely seal the opening C11 of the first impingement cavity C1, except cooling air flowing through the first impingement holes 112h.

In another embodiment (not shown), the first impingement plate 112 may be positioned inside or within the first impingement cavity C1, i.e. radially in-between the lower surface 100b of the inner shroud 100 and the opening C11 of the first impingement cavity C1. The first impingement plate 112 may completely seal a portion or volume or space of the first impingement cavity C 1 disposed between the first impingement plate 112 and the lower surface 100b of the inner shroud 100, except cooling air flowing through the first impingement holes 112h.

As schematically shown in FIGs 6B and 6C, and FIG 7, the lower surface 100b of the inner shroud 100 in the second region R2 may include a second impingement cavity C2. The second impingement chamber 120c may include the second impingement cavity C2.

The second impingement plate 122 may be positioned at or within or outside the second impingement cavity C2.

The second impingement plate 122 may be positioned at an opening C21 of the second impingement cavity C2, as shown in FIG 6C. In other words, the second impingement plate 122 may be formed as a flat sheet or plate-like or planar and may be flush with the opening C21 of the second impingement cavity C2, i.e. completely covering or closing or capping the opening C21 of the second impingement cavity C2. The second impingement plate 122 may completely seal the opening C21 of the second impingement cavity C2, except cooling air flowing through the second impingement holes 122h.

Alternatively, as shown in FIG 6B, the second impingement plate 122 may be positioned outside the second impingement cavity C2 i.e. radially spaced apart from the opening C21 of the second impingement cavity C2. The second impingement unit 120 may include flanking plate members 122s or side plate members 122s that extend radially between the second impingement plate 122 and the lower surface 100b of the inner shroud 100 enclosing the second impingement cavity C2 with the second impingement chamber 120c. The second impingement plate 122 and the flanking plate members 122s may completely seal the opening C21 of the second impingement cavity C2, except cooling air flowing through the second impingement holes 122h.

In another embodiment as shown in FIG 7, the second impingement plate 122 may be positioned inside or within the second impingement cavity C2, i.e. radially in-between the lower surface 100b of the inner shroud 100 and the opening C21 of the second impingement cavity C2. The second impingement plate 122 may completely seal a portion or volume or space of the second impingement cavity C2 disposed between the second impingement plate 122 and the lower surface 100b of the inner shroud 100, except cooling air flowing through the second impingement holes 122h.

The cover plate 124 may be positioned at the opening C21 of the second impingement cavity C2, as shown in FIG 7. In other words, the cover plate 124 may be formed as a flat sheet or plate-like or planar and may be flush with the opening C21 of the second impingement cavity C2, i.e. completely covering or closing or capping the opening C21 of the second impingement cavity C2.

The cover plate 124 may completely seal a portion or volume or space of the second impingement cavity C2 disposed between the second impingement plate 122 and the cover plate 124 of the inner shroud 100, except cooling air flowing through the second impingement holes 122h.

As shown in FIGs 4 and 6A, the connector flow channel 130 extends preferably axially through the seal unit 70.

The seal unit 70 includes at least one of a seal support lug or member or wall 72 and a seal plate 74.

The seal support lug 72 may extend radially inwards from the lower surface 100b of the inner shroud 100. The seal support lug 72 may define the first region R1 and the second region R2. The connector flow channel 130 extends through the seal support lug 72. The seal plate 74 may be supported at or affixed to the seal support lug 72, preferably at a radially outer end or side of the seal plate 74. A radially inner end or side (not shown) of the seal plate 74 may be held or supported by a seal housing (not shown). The connector flow channel 130 may be formed as a through-hole passing through the seal support lug 72 or may be formed as a separate tubular structure or tube inserted through a through-hole formed in the seal support lug 72.

The seal plate 74 may not have any connector flow channel formed therethrough. Alternatively a further connector flow channel (not shown) extends through the seal plate 74.

The seal plate 74 may be arranged to extend radially inwards from the lower surface 100b of the inner shroud 100 or from the seal support lug 72. The seal plate 74 may define the first region R1 and the second region R2. The connector flow channel 130 extends through the seal plate 74. The seal plate 74 may be supported at or affixed to the lower surface 100b of the inner shroud 100 or to the seal support lug 72, preferably at a radially outer end or side of the seal plate 74. A radially inner end or side (not shown) of the seal plate 74 may be held or supported by a seal housing (not shown). The connector flow channel 130 may be formed as a through-hole passing through the seal plate 74 or may be formed as a separate tubular structure or tube inserted through a through-hole formed in the seal plate 74.

The seal support lug 72 may not have any connector flow channel formed therethrough. Alternatively a further connector flow channel (not shown) extends through the seal support lug 72.

As shown in FIG 5 and FIG 6B, the first impingement cavity C1 and the second impingement cavity C2 may be separated by an intervening section 101 or intervening wall 101 of the inner shroud 100. The intervening section 101 or intervening wall 101 of the inner shroud 100 may extend radially inwards from the lower surface 100b of the inner shroud 100. The connector flow channel 130 extends preferably axially through the intervening section 101 of the inner shroud 100. In other words, the connector flow channel 130 may be formed as a through-hole in the intervening section 101 or intervening wall 101 of the inner shroud 100. Alternatively, the connector flow channel 130 may be formed as a separate tubular structure or tube inserted through a through-hole formed in the intervening section 101 or intervening wall 101 of the inner shroud 100.

The seal unit 70, preferably at least one of and more preferably both of seal support lug 72 and the seal plate 74, may be aligned with the intervening section 101 or intervening wall 101 of the inner shroud 100 in the radial direction.

Referring to FIG 4, exemplary dimensions of the connector flow channel 130 with respect to the seal support lug or of the seal plate or separation distance between the pressure-wall side 102 and the suction-wall side 104 are depicted. As shown in FIG 4, a width W1 of the connector flow channel 130 is between 2 percent and 40 percent, and preferably between 5 percent and 15 percent, of a width W2 of the seal support lug 72 or of the seal plate 74, measured along a circumferential direction of the inner shroud 100 or of the separation distance W2 between the pressure-wall side 102 and the suction-wall side 104 of the inner shroud 100, measured at the lower surface 100b along the circumferential direction of the inner shroud 100

It may be noted that although all the FIGs show only one connector flow channel 130, the vane 1 may include (not shown) a plurality of connector flow channels 130, preferably extending axially, spaced apart from each other in the circumferential direction of the inner shroud 100. Thus, the cooling air 5 is received in a distributed manner at the second region R2 or at the cooling air receiving chamber 124c, thereby achieving more uniform impingement jet formations by the second impingement plate 122.

Referring to FIG 8, further embodiments of the vane 1 of the present technique are explained.

As shown in the example of FIG 8, a radial distance H2 of the second impingement plate 122 from the lower surface 100b of the inner shroud 100 may be less than or equal to a radial distance H1 of the first impingement plate 112 from the lower surface 100b of the inner shroud 100. Thus, impingement jets with increased force for impinging onto the lower surface 100b of the inner shroud 100 in the second region R2 may be formed.

A diameter of second impingement holes 122h of the second impingement plate 122 may be smaller than a diameter of the first impingement holes 112h of the first impingement plate 112.

As shown in FIGs 9A and 9B, the inner shroud 100 may comprise at least one shroud cooling hole 100h having an inlet 100ha positioned at the second impingement chamber 120c and an outlet 100hb positioned at the upper surface 100a of the inner shroud 100 or a side surface 100s of the inner shroud 100.

The cooling air from the shroud cooling hole 100h may be ejected into the hot gas path 55. The outlet 100hb of the shroud cooling hole 100h may be positioned at the hot gas path 55.

As shown in FIG 9A, the inner shroud 100 may comprise a plurality of shroud cooling holes 100h. The inlet 100ha of at least one of the shroud cooling holes 100h may be positioned at the second impingement chamber 120c and the outlet 100hb may be positioned at the upper surface 100a of the inner shroud 100. The inlet 100ha of at least one of the shroud cooling holes 100h may be positioned at the second impingement chamber 120c and the outlet 100hb may be positioned at the side surface 100s of the inner shroud 100.

As shown in FIG 9A, the shroud cooling holes 100h may be straight through-holes with respect to the lower surface 100b and the upper surface 100a of the inner shroud 100 i.e. the shroud cooling holes 100h may be radially aligned or radially extending.

As shown in FIG 9A, the shroud cooling holes 100h may be straight through-holes with respect to the lower surface 100b and the side surface 100s of the inner shroud 100 i.e. the shroud cooling holes 100h may be axially aligned or axially extending.

As shown in FIG 9B, the shroud cooling holes 100h may be inclined through-holes with respect to the lower surface 100b and the upper surface 100a of the inner shroud 100 i.e. the shroud cooling holes 100h may be inclined with respect to the radially direction.

The shroud cooling holes 100h may be inclined through-holes with respect to the lower surface 100b and the side surface 100s of the inner shroud 100 i.e. the shroud cooling holes 100h may be inclined with respect to the radially direction.

Referring to FIG 10, the vane 1 may be formed such that the lower surface 100b of the inner shroud 100 in the first region R1 may include a base opening 61 of the airfoil 60. The base opening 61 may be understood as the opening of the internal space or inner cavity of the airfoil 60. The inner cavity of the airfoil 60 is the cavity or space enclosed by the airfoil shape i.e. the space or cavity defined by the pressure wall 62, the suction wall 64, the leading edge 66 and the trailing edge 68 of the airfoil 60.

The first impingement chamber 110c and the base opening 61 of the airfoil 60 may be non-overlapping or discontinuous with respect to each other. In other words, the first impingement chamber 110c and the base opening 61 of the airfoil 60 are fluidly disconnected from each other i.e. the cooling air 5 introduced into the first chamber 110c does not flow into the base opening 61 of the airfoil 60.

The above described gas turbine vane 1 may be incorporated in the gas turbine 10, for example in the gas turbine 10 of FIG 1.

The vane 1 may be the inlet guide vane 44 or a vane 1 of a first vane stage of the turbine section 18. The vane 1 may be the directly downstream of the transition duct 17.

The first impingement plate 112 may be configured to receive cooling air 5 from a last stage or final stage of the compressor section 14.

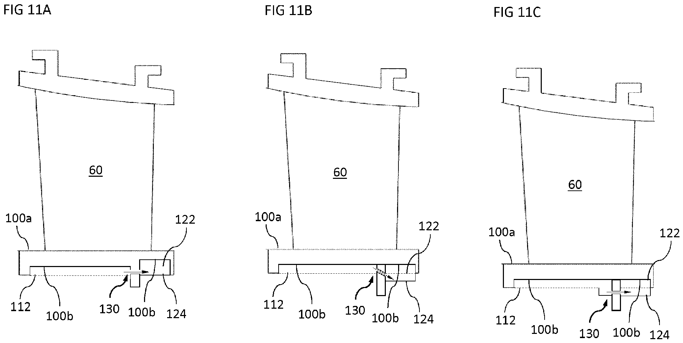

FIGs 11A - 11C depict further exemplary embodiments of the present technique. As can be seen in FIGs 11A, 11B and 11C, the first impingement plate 112 and the second impingement plate 122 are arranged to face the lower surface 100b of the inner shroud 100 in the first region R1 and the lower surface 100b of the inner shroud 100 in the second region R2, respectively. The cover plate 124 of the second impingement unit is also arranged in the second region R2 facing the second impingement plate 122.

As shown in FIG 11A, the first impingement plate 112 and the cover plate 124 may be flush with each other.

In other words, a distance between the upper surface 100a of the inner shroud 100 and the first impingement plate 112 may be same as a distance between the upper surface 100a of the inner shroud 100 and the cover plate 124.

The second impingement 122 plate may be disposed between the lower surface 100b of the inner shroud 100 and the cover plate 124.

A distance between the lower surface 100b of the inner shroud 100 and the cover plate 124 in the second region R2 may be greater than a distance between the lower surface 100b of the inner shroud 100 and the first impingement plate 112 in the first region R1.

As shown in FIG 11B, the first impingement plate 112 and the cover plate 124 may not be flush with each other. However, optionally, the first impingement plate 112 and second impingement plate 122 may be flush with each other.

In other words, a distance between the first impingement plate 112 and the upper surface 100a and/or the lower surface 100b of the inner shroud 100 in the first region R1 may be same as a distance between the second impingement plate 122 and the upper surface 100a and/or the lower surface 100b of the inner shroud 100 in the second region R2.

The second impingement 122 plate may be disposed between the lower surface 100b of the inner shroud 100 and the cover plate 124.

The connector flow channel 130 may be slantingly formed i.e. may be formed to be inclined from the inlet 132 to the outlet 134 towards the rotational axis of the gas turbine. In other words, may be formed to be inclined from a radially outward position in the first region R1 towards a radially inward position in the second region R2. In other words, the connector flow channel 130 may be formed to be inclined such that the inlet 132 is disposed at a radially outward position in the first region R1 whereas the outlet 134 is disposed at a radially inward position in the second region R2.

As shown in FIG 11C, the first impingement plate 112 may be formed in a stepped manner i.e. a first part of the first impingement plate 112 disposed adjacent to the inlet 132 of the connector flow channel 130 may be formed to be disposed at a radially inward position than a second part of the first impingement plate 112 disposed away from the inlet 132 of the connector flow channel 130. The first part may be disposed between the second part and the connector flow channel.

The first part of the first impingement plate 112 may be flush with the cover plate 124.

The second part of the first impingement plate 112 may be flush with the second impingement plate 122.

**LIST OF REFERENCE SIGNS**

| | | | |
|---|---|---|---|
| 1 | turbine vane | 92 | vane fixing means |
| 5 | cooling air | 100 | inner shroud |
| 5a | first portion of cooling air | 100a | upper surface |
| 5b | second portion of cooling air | 100b | lower surface |
| 9a | first flow channel | 100h | shroud cooling hole |
| 9b | second flow channel | | |
| 10 | turbine | 100ha | inlet of shroud cooling hole |
| 12 | gas inlet | 100hb | outlet of shroud cooling hole |
| 14 | section | 100s | side surface of the inner shroud |
| 16 | compressor combustor section | 101 | intervening section of the inner shroud |
| 17 | transition duct | 102 | pressure-wall side |
| 18 | turbine section | 104 | suction-wall side |
| 19 | combustor | 106 | leading-edge side |
| 20 | cans rotational axis | 108 | trailing-edge side |
| 22 | longitudinal or shaft | 110 | first impingement unit |
| 24 | air | 110c | first impingement chamber |
| 26 | burner | 112 | first impingement plate |
| 28 | plenum combustion chamber | 112h | first impingement cooling holes |
| 30 | burner | 112s | flanking plate |
| 32 | diffuser | 120 | second impingement unit |
| 34 | combustion | 120c | second impingement chamber |
| 36 | gas or working gas blade discs | 122 | second impingement plate |
| 36c | carrying air channel | 122h | second impingement cooling holes |
| 38 | cooling turbine blades | 122s | flanking plate |
| 40 | | 124 | cover plate |
| 42 | guiding vanes | 124c | cooling air receiving chamber |
| 44 | stator inlet | 130 | connector flow channel |
| 46 | guiding vanes | 132 | inlet |
| 48 | vane stages rotor blade | 134 | outlet |
| 50 | stages | C1 | first impingement cavity |
| 52 | casing outer surface | C11 | opening of the first impingement cavity |
| 53 | radially rotor drum | C2 | second impingement cavity |
| 54 | inner surface | C21 | opening of the second impingement cavity |
| 55 | radially hot | | |
| 56 | gas path | H2 | distance of second impingement plate from inner shroud |
| 60 | passage airfoil | | |
| 61 | base of the airfoil | H1 | distance of first impingement plate from inner shroud |
| 62 | opening wall | | |
| 64 | pressure suction wall | R1 | first region |
| 66 | leading edge | R2 | second region |
| 68 | trailing edge | W1 | width of the connector flow channel |
| 70 | seal unit | W2 | width of the seal support lug or of the seal plate |
| 72 | seal support lug | | |
| 74 | seal plate | | |
| 80 | interstage seal | | |
| 82 | space | | |
| 90 | outer shroud | | |

## Claims

1. A turbine vane (1) for a gas turbine (10), the turbine vane (1) comprising:
- an inner shroud (100) having an upper surface (100a) and a lower surface (100b);
- a seal unit (70) disposed at the lower surface (100b) of the inner shroud (100) and defining a first region (R1) and a second region (R2) at the lower surface (100b) of the inner shroud (100), wherein the inner shroud (100) comprises a first impingement cavity (C1) at the lower surface (100b) of the inner shroud (100) at the first region (R1), and a second impingement cavity (C2) at the lower surface (100b) of the inner shroud (100) at the second region (R2);
- a first impingement unit (110) arranged in the first region (R1) and comprising a first impingement plate (112) facing the inner shroud (100) defining a first impingement chamber (110c) thereinbetween, wherein the first impingement chamber (110c) includes the first impingement cavity (C1) and wherein the first impingement plate (112) is configured to receive cooling air (5) and form impingement jets directed into the first impingement chamber (110c);
- a second impingement unit (120) arranged in the second region (R2) and comprising a second impingement plate (122) facing the inner shroud (100) defining a second impingement chamber (120c) thereinbetween, wherein the second impingement chamber (120c) includes the second impingement cavity (C2); and
- at least one connector flow channel (130) configured to direct cooling air (5) from the first impingement chamber (110c) to the second region (R2);
wherein the second impingement plate (122) is configured to receive cooling air (5) from the connector flow channel (130) and to form impingement jets directed into the second impingement chamber (120c);
**characterized in that**:
- wherein the first impingement cavity (C1) and the second impingement cavity (C2) are separated by an intervening section (101) of the inner shroud (100), and the connector flow channel (130) extends through the intervening section (101) of the inner shroud (100); or
- wherein the seal unit (70) comprises: a seal support lug (72) extending radially inwards from the lower surface (100b) of the inner shroud (100), and a seal plate (74) supported at and arranged radially inwards from the inner shroud (100) and extending radially inwards from the lower surface (100b) of the inner shroud (100) or from the seal support lug (72), and wherein the connector flow channel (130) extends through at least one of the seal support lug (72) and the seal plate (74).

2. The turbine vane (1) according to claim 1, wherein the second impingement plate (122) is arranged to be flush with an opening (C21) of the second impingement cavity (C2), or wherein the second impingement plate (122) is arranged within the second impingement cavity (C2).

3. The turbine vane (1) according to claim 1 or 2, wherein the seal unit (70) comprises the seal support lug (72) and the seal plate (74), and the connector flow channel (130) extends through at least one of the seal support lug (72) and the seal plate (74), and
wherein a width (W1) of the connector flow channel (130) is between 2 percent and 40 percent, and preferably between 5 percent and 15 percent, of a width (W2) of the seal support lug (72) or of the seal plate (74), measured along a circumferential direction of the inner shroud (100).

4. The turbine vane (1) according to any one of the preceding claims, wherein the second impingement unit (120) comprises a cover plate (124) arranged radially inward of and facing the second impingement plate (122) and defining a cooling air receiving chamber (124c) thereinbetween, and wherein an outlet (134) of the connector flow channel (130) is positioned at the cooling air receiving chamber (124c).

5. The turbine vane (1) according to any one of the preceding claims, wherein the lower surface (100b) of the inner shroud (100) in the first region (R1) comprises a base opening (61) of the airfoil (60), and wherein the first impingement chamber (110c) and the base opening (61) of the airfoil (60) are non-overlapping.

6. The turbine vane (1) according to any one of the preceding claims,
wherein a radial distance (H2) of the second impingement plate (122) from the lower surface (100b) of the inner shroud (100) is less than or equal to a radial distance (H1) of the first impingement plate (112) from the lower surface (100b) of the inner shroud (100); and/or
wherein a diameter of second impingement holes (122h) of the second impingement plate (122) are smaller than a diameter of first impingement holes (112h) of the first impingement plate (112).

7. The turbine vane (1) according to any one of the preceding claims, wherein the inner shroud (100) comprises at least one shroud cooling hole (100h) having an inlet (100ha) positioned at the second impingement chamber (120c) and an outlet (100hb) positioned at the upper surface (100a) of the inner shroud (100) or a side surface (100s) of the inner shroud (100).

8. A gas turbine (10) comprising a turbine vane (1), wherein the turbine vane (1) is according to any of the preceding claims.

9. The gas turbine (10) according to claim 8, comprising:
- a turbine blade (38) downstream of the turbine vane (1) and mounted on a blade carrying disk (36); and
- an interstage seal (80) disposed axially between the blade carrying disk (36) and the turbine vane (1); wherein the second impingement unit (120) is positioned in a space (82) defined by the inner shroud (100) of the turbine vane (1), the seal unit (70) and the interstage seal (80), and wherein the interstage seal (80) is configured to seal the space (82) at radially inner side of the space (82).

10. The gas turbine (10) according to claim 8 or 9, wherein the first impingement plate (112) is configured to receive cooling air (5) from a last stage of a compressor (14).

## Patentansprüche

1. Turbinenschaufel (1) für eine Gasturbine (10), wobei die Turbinenschaufel (1) Folgendes umfasst:
- eine Innendeckscheibe (100), die eine obere Oberfläche (100a) und eine untere Oberfläche (100b) aufweist;
- eine Dichtungseinheit (70), die an der unteren Oberfläche (100b) der Innendeckscheibe (100) angeordnet ist und einen ersten Bereich (R1) und einen zweiten Bereich (R2) auf der unteren Oberfläche (100b) der Innendeckscheibe (100) definiert,
wobei die Innendeckscheibe (100) einen ersten Aufprallhohlraum (C1) an der unteren Oberfläche (100b) der Innendeckscheibe (100) in dem ersten Bereich (R1),und einen zweiten Aufprallhohlraum (C2) an der unteren Oberfläche (100b) der Innendeckscheibe (100) in dem zweiten Bereich (R2) umfasst;
- eine erste Aufpralleinheit (110), die in dem ersten Bereich (R1) angeordnet ist und eine erste Aufprallplatte (112) aufweist, die der Innendeckscheibe (100) zugewandt ist und die eine erste Aufprallkammer (110c) dazwischen definiert, wobei die erste Aufprallkammer (110c) den ersten Aufprallhohlraum (C1) enthält und wobei die erste Aufprallplatte (112) konfiguriert ist, Kühlluft (5) aufzunehmen und Aufprallstrahlen zu bilden, die in die erste Aufprallkammer (110c) geleitet werden;
- eine zweite Aufpralleinheit (120), die in dem zweiten Bereich (R2) angeordnet ist und eine zweite Aufprallplatte (122) aufweist, die der Innendeckscheibe (100) zugewandt ist und die eine zweite Aufprallkammer (120c) dazwischen definiert, wobei die zweite Aufprallkammer (120c) den zweiten Aufprallhohlraum (C2) enthält; und
- mindestens einen Strömungskanal (130) des Verbindungsstücks, der konfiguriert ist, Kühlluft (5) aus der ersten Aufprallkammer (110c) in den zweiten Bereich (R2) zu leiten;
wobei die zweite Aufprallplatte (122) konfiguriert ist, Kühlluft (5) von dem Strömungskanal (130) des Verbindungsstücks aufzunehmen und Aufprallstrahlen zu bilden, die in die zweite Aufprallkammer (120c) geleitet werden;
**dadurch gekennzeichnet, dass**:
- der erste Aufprallhohlraum (C1) und der zweite Aufprallhohlraum (C2) durch einen Zwischenabschnitt (101) der Innendeckscheibe (100) getrennt sind und der Strömungskanal (130) des Verbindungsstücks sich durch den Zwischenabschnitt (101) der Innendeckscheibe (100) erstreckt; oder
- wobei die Dichtungseinheit (70) Folgendes umfasst: einen Dichtungsträger-Ansatz (72), der sich von der unteren Oberfläche (100b) der Innendeckscheibe (100) radial einwärts erstreckt, und eine Dichtungsplatte (74), die an der Innendeckscheibe (100) getragen wird und von der Innendeckscheibe (100) radial einwärts angeordnet ist und sich von der unteren Oberfläche (100b) der Innendeckscheibe (100) oder dem Dichtungsträger-Ansatz (72) radial einwärts erstreckt, wobei sich der Strömungskanal (130) des Verbindungsstücks durch den Dichtungsträger-Ansatz (72) und/oder die Dichtungsplatte (74) erstreckt.

2. Turbinenschaufel (1) nach Anspruch 1, wobei die zweite Aufprallplatte (122) derart angeordnet ist, dass sie mit einer Öffnung (C21) des zweiten Aufprallhohlraums (C2) bündig ist, oder wobei die zweite Aufprallplatte (122) in dem zweiten Aufprallhohlraum (C2) angeordnet ist.

3. Turbinenschaufel (1) nach Anspruch 1 oder 2, wobei die Dichtungseinheit (70) den Dichtungsträger-Ansatz (72) und die Dichtungsplatte (74) umfasst und der Strömungskanal (130) des Verbindungsstücks sich durch den Dichtungsträger-Ansatz (72) und/oder die Dichtungsplatte (74) erstreckt, und
wobei eine Breite (W1) des Strömungskanals (130) des Verbindungsstücks zwischen 2 Prozent und 40 Prozent und vorzugsweise zwischen 5 Prozent und 15 Prozent einer Breite (W2) des Dichtungsträger-Ansatzes (72) oder der Dichtungsplatte (74), gemessen entlang einer Umfangsrichtung der Innendeckscheibe (100), ist.

4. Turbinenschaufel (1) nach einem der vorhergehenden Ansprüche, wobei die zweite Aufpralleinheit (120) eine Deckplatte (124) umfasst, die von der zweiten Aufprallplatte (122) radial einwärts angeordnet ist und der zweiten Aufprallplatte (120) zugewandt ist und eine Kühlluft-Aufnahmekammer (124c) dazwischen definiert und wobei ein Auslass (134) des Strömungskanals (130) des Verbindungsstücks an der Kühlluft-Aufnahmekammer (124c) positioniert ist.

5. Turbinenschaufel (1) nach einem der vorhergehenden Ansprüche, wobei die untere Oberfläche (100b) der Innendeckscheibe (100) in dem ersten Bereich (R1) eine Basisöffnung (61) des Strömungsprofils (60) umfasst und wobei die erste Aufprallkammer (110c) und die Basisöffnung (61) des Strömungsprofils (60) nicht überlappen.

6. Turbinenschaufel (1) nach einem der vorhergehenden Ansprüche,
wobei eine radiale Entfernung (H2) der zweiten Aufprallplatte (122) von der unteren Oberfläche (100b) der Innendeckscheibe (100) kleiner oder gleich einer radialen Entfernung (H1) der ersten Aufprallplatte (112) von der unteren Oberfläche (100b) der Innendeckscheibe (100) ist; und/oder
wobei ein Durchmesser von zweiten Aufpralllöchern (122h) der zweiten Aufprallplatte (122) kleiner ist als ein Durchmesser von ersten Aufpralllöchern (112h) der ersten Aufprallplatte (112).

7. Turbinenschaufel (1) nach einem der vorhergehenden Ansprüche, wobei die Innendeckscheibe (100) mindestens ein Deckscheibenkühlloch (100h) umfasst, das einen Einlass (100ha), der an der zweiten Aufprallkammer (120c) positioniert ist, und einen Auslass (100hb), der an der oberen Oberfläche (100a) der Innendeckscheibe (100) oder einer Seitenfläche (100s) der Innendeckscheibe (100) positioniert ist, aufweist.

8. Gasturbine (10), die eine Turbinenschaufel (1) umfasst, die eine Turbinenschaufel (1) nach einem der vorhergehenden Ansprüche ist.

9. Gasturbine (10) nach Anspruch 8, die Folgendes umfasst:
- eine Turbinenlaufschaufel (38), die sich stromabwärts der Turbinenschaufel (1) befindet und auf einer Schaufelträgerscheibe (36) montiert ist; und
- eine Zwischenstufendichtung (80), die zwischen der Schaufelträgerscheibe (36) und der Turbinenschaufel (1) axial angeordnet ist; wobei die zweite Aufpralleinheit (120) in einem Raum (82) positioniert ist, der durch die Innendeckscheibe (100) der Turbinenschaufel (1), der Dichtungseinheit (70) und der Zwischenstufendichtung (80) definiert ist, und wobei die Zwischenstufendichtung (80) konfiguriert ist, den Raum (82) an der radialen Innenseite des Raums (82) abzudichten.

10. Gasturbine (10) nach Anspruch 8 oder 9, wobei die erste Aufprallplatte (112) konfiguriert ist, Kühlluft (5) von einer letzten Stufe eines Kompressors (14) aufzunehmen.

## Revendications

1. Pale de turbine (1) pour une turbine à gaz (10), la pale de turbine (1) comportant :
- un plateau intérieur (100) ayant une surface supérieure (100a) et une surface inférieure (100b) ;
- un bloc d'étanchéité (70) disposé sur la surface inférieure (100b) du plateau intérieur (100) et définissant une première zone (R1) et une seconde zone (R2) sur la surface inférieure (100b) du plateau intérieur (100),
dans laquelle le plateau intérieur (100) comporte une première cavité d'impact (C1) sur la surface inférieure (100b) du plateau intérieur (100) au niveau de la première zone (R1), et une seconde cavité d'impact (C2) sur la surface inférieure (100b) du plateau intérieur (100) au niveau de la seconde zone (R2) ;
- un premier bloc d'impact (110) agencé dans la première zone (R1) et comportant une première plaque d'impact (112) dirigée vers le plateau intérieur (100) définissant une première chambre d'impact (110c) entre celles-ci, dans laquelle la première chambre d'impact (110c) inclut la première cavité d'impact (C1) et dans laquelle la première plaque d'impact (112) est configurée pour recevoir de l'air de refroidissement (5) et former des jets d'impact dirigés dans la première chambre d'impact (110c) ;
- un second bloc d'impact (120) agencé dans la seconde zone (R2) et comportant une seconde plaque d'impact (122) dirigée vers le plateau intérieur (100) définissant une seconde chambre d'impact (120c) entre celles-ci, dans laquelle la seconde chambre d'impact (120c) inclut la seconde cavité d'impact (C2) ; et
- au moins un canal d'écoulement de liaison (130) configuré pour diriger l'air de refroidissement (5) de la première chambre d'impact (110c) jusqu'à la seconde zone (R2) ; dans laquelle la seconde plaque d'impact (122) est configurée pour recevoir l'air de refroidissement (5) provenant du canal d'écoulement de liaison (130) et pour former des jets d'impact dirigés dans la seconde chambre d'impact (120c) ;
**caractérisée en ce que** :
- dans laquelle la première cavité d'impact (C1) et la seconde cavité d'impact (C2) sont séparées par une section interposée (101) du plateau intérieur (100), et le canal d'écoulement de liaison (130) s'étend à travers la section interposée (101) du plateau intérieur (100) ; ou
- dans laquelle le bloc d'étanchéité (70) comporte : une patte de support de joint (72) s'étendant radialement vers l'intérieur depuis la surface inférieure (100b) du plateau intérieur (100), et une plaque de joint (74) supportée sur le plateau intérieur (100) et agencée radialement vers l'intérieur de celui-ci, et s'étendant radialement vers l'intérieur à partir de la surface intérieure (100b) du plateau intérieur (100) ou à partir de la patte de support de joint (72), et dans laquelle le canal d'écoulement de liaison (130) s'étend à travers au moins un élément parmi la patte de support de joint (72) et la plaque de joint (74).

2. Pale de turbine (1) selon la revendication 1, dans laquelle la seconde plaque d'impact (122) est agencée de manière à affleurer une ouverture (C21) de la seconde cavité d'impact (C2), ou dans laquelle la seconde plaque d'impact (122) est agencée à l'intérieur de la seconde cavité d'impact (C2).

3. Pale de turbine (1) selon la revendication 1 ou 2, dans laquelle le bloc d'étanchéité (70) comporte la patte de support de joint (72) et la plaque de joint (74), et le canal d'écoulement de liaison (130) s'étend à travers au moins un élément parmi la patte de support de joint (72) et la plaque de joint (74), et
dans laquelle une largeur (W1) du canal d'écoulement de liaison (130) est comprise entre 2 pour-cent et 40 pour-cent, et de préférence entre 5 pour-cent et 15 pour-cent, d'une largeur (W2) de la patte de support de joint (72) ou de la plaque de joint (74), mesurée le long d'une direction circonférentielle du plateau intérieur (100).

4. Pale de turbine (1) selon l'une quelconque des revendications précédentes, dans laquelle le second bloc d'impact (120) comporte une plaque de recouvrement (124) agencée radialement vers l'intérieur de la seconde plaque d'impact (122) et dirigée vers celle-ci et définissant une chambre de réception d'air de refroidissement (124c) entre celles-ci, et dans laquelle une sortie (134) du canal d'écoulement de liaison (130) est positionnée sur la chambre de réception d'air de refroidissement (124c).

5. Pale de turbine (1) selon l'une quelconque des revendications précédentes, dans laquelle la surface inférieure (100b) du plateau intérieur (100) dans la première zone (R1) comporte une ouverture de base (61) du profil (60), et dans laquelle la première chambre d'impact (110c) et l'ouverture de base (61) du profil (60) sont non chevauchantes.

6. Pale de turbine (1) selon l'une quelconque des revendications précédentes,
dans laquelle une distance radiale (H2) de la seconde plaque d'impact (122) par rapport à la surface inférieure (100b) du plateau intérieur (100) est inférieure ou égale à une distance radiale (H1) de la première plaque d'impact (112) par rapport à la surface inférieure (100b) du plateau intérieur (100) ; et/ou
dans laquelle un diamètre de seconds trous d'impact (122h) de la seconde plaque d'impact (122) est plus petit qu'un diamètre de premiers trous d'impact (112h) de la première plaque d'impact (112).

7. Pale de turbine (1) selon l'une quelconque des revendications précédentes, dans laquelle le plateau intérieur (100) comporte au moins un trou de refroidissement de plateau (100h) ayant une entrée (100ha) positionnée sur la seconde chambre d'impact (120c) et une sortie (100hb) positionnée sur la surface supérieure (100a) du plateau intérieur (100) ou une surface latérale (100s) du plateau intérieur (100).

8. Turbine à gaz (10) comportant une pale de turbine (1), dans laquelle la pale de turbine (1) est selon l'une quelconque des revendications précédentes.

9. Turbine à gaz (10) selon la revendication 8, comportant :
- une aube de turbine (38) en aval de la pale de turbine (1) et montée sur un disque porteur de pale (36) ; et
- un joint inter-étage (80) disposé axialement entre le disque porteur de pale (36) et la pale de turbine (1) ; dans laquelle le second bloc d'impact (120) est positionné dans un espace (82) défini par le plateau intérieur (100) de la pale de turbine (1), le bloc d'étanchéité (70) et le joint inter-étage (80), et dans laquelle le joint inter-étage (80) est configuré pour étanchéifier l'espace (82) sur un côté radialement intérieur de l'espace (82).

10. Turbine à gaz (10) selon la revendication 8 ou 9, dans laquelle la première plaque d'impact (112) est configurée pour recevoir de l'air de refroidissement (5) provenant d'un dernier étage d'un compresseur (14).
